# EUROPEAN PATENT APPLICATION

(11) **EP 1 760 123 A2**
(43) Date of publication of application: **07.03.2007**
(21) Application number: 06291407.2
(22) Date of filing: 06.09.2006
(51) Int. Cl.: C09D 11/00, C09D 11/02, C09K 11/00, H01J 9/02, H01J 11/02, H01J 17/02

(54) **Printing ink and phosphor slurry composition, printer and plasma display panel using the same, and method of manufacturing the same**

(30) Priority: 06.09.2005 KR 20050082616; 12.10.2005 KR 20050096222
(71) Applicant: LG Electronics Inc., Yongdungpo-gu Seoul (KR)
(72) Inventor: Park, Dae Hyun, Yongin-si Gyeonggi-do (KR); Kim, Kyung Ku, Anyang-si Gyeonggi-do (KR); Seo, Byung Hwa, Gangnam-gu Seoul (KR); Park, Min Soo, Seocho-gu Seoul (KR); Jeon, Won Seok, Jangan-gu Suwon-si Gyeonggi-do (KR); Shin, Dong Oh, Gwacheon-si Gyeonggi-do (KR); Park, Deok Hai, Daegu (KR); Lee, Hong Cheol, Seocho-gu Seoul (KR); Kim, Je Seok, Dongan-gu Anyang-si Gyeonggi-do (KR); Ryu, Byung Gil, Dongdaemun-gu Seoul (KR)
(74) Representative: Vignesoult, Serge L. M.

(57) **Abstract**

A printing ink and a phosphor slurry composition, a printer and a plasma display panel using the same, and a method of manufacturing the same are disclosed. The printing ink contains a viscosity modifying agent for changing viscosity of the printing ink when stress is applied to the printing ink. The phosphor composition includes phosphor powder, a dispersing agent, and a binder. The phosphor composition further includes a substance having thixotropy.

## Description

This application claims the benefit of Korean Patent Application Nos. 10-2005-0082616 filed on September 06, 2005, 10-2005-0096222 filed on October 12, 2005 which is hereby incorporated by reference as if fully set forth herein.

### BACKGROUND OF THE INVENTION

### Field of the Invention

The present invention relates to a printing ink and a phosphor slurry composition, a printer and a plasma display panel using the same, and a method of manufacturing the same.

### Discussion of the Related Art

A plasma display panel (hereinafter referred to as a "PDP") is a kind of light emission type device that displays pictures using a discharge phenomenon. There is no necessity for mounting an active element in each cell of the plasma display panel. As a result, it is possible to simplify a process for manufacturing the plasma display panel and to easily increase the size of a screen of the plasma display panel. Furthermore, the response speed of the plasma display panel is high. Consequently, the plasma display panel is widely being used as a display device for picture display systems.

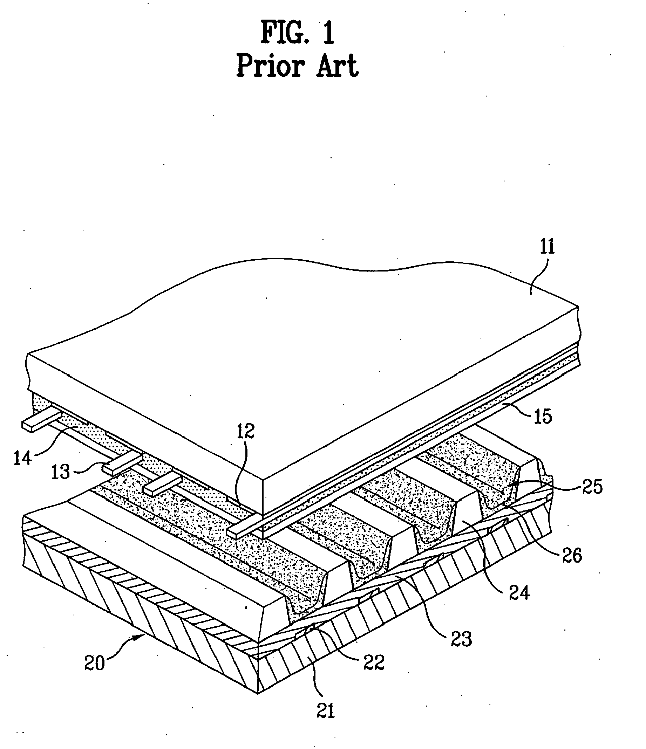

The structure of the PDP is shown in FIG. 1. As shown in FIG. 1, the PDP is constructed in a structure in which an upper panel 10 is disposed on a lower panel 20 while the upper panel 10 and the lower panel 20 are opposite to each other. The upper panel 10 has a pair of sustain electrodes, which are arranged at the inner surface of a transparent substrate 11 of the upper panel 10. Generally, the sustain electrodes include a transparent electrode 12 and a bus electrode 13.

The sustain electrodes are coated with a dielectric layer 14 for AC driving, and a protective film 15 is formed at the surface of the dielectric layer 14.

On the other hand, address electrodes 22 are arranged on a dielectric layer 21 formed at the inner surface of the lower panel 20. An insulating layer 23 is formed on the dielectric layer 21 and the address electrodes 22. On the insulating layer 23 are disposed partition walls 24 for forming discharge cells. Between the partition walls are formed phosphor layers of red, blue, and green colors, which constitute sub pixels.

The discharge cells 25 are partitioned for the respective sub pixels by the partition walls 24. In the respective discharge cells 25 are encapsulated discharge gases. Three sub pixels constitute one pixel.

Meanwhile, principal components of the plasma display panel with the above-stated construction, such as the electrodes 12, 13, and 22, the partition walls 54, and the phosphor layers 26, are manufactured using various different methods, such as an offset printing method, an inkjet printing method, and a dispensing method.

The offset printing method is a method of transferring a printing ink to a blanket and printing the ink transferred to the blanket on a substrate.

The offset printing method is suitable for mass production. Furthermore, the offset printing method has simplified processes. For this reason, the offset printing method is widely being used.

However, the conventional offset printing method requires high mobility of the ink, at the time of transferring the ink to the blanket. Also, the conventional offset printing method requires high adhesive power necessary for the ink to be easily stuck to the surface of the blanket in the transferring process. Furthermore, the conventional offset printing method requires high adhesive power necessary for the ink printed on the substrate to maintain the shape thereof without falling of the ink in the final printing process.

The ink is a fluid. Consequently, the ink simultaneously has mobility and viscosity. Generally, however, the viscosity of a fluid having high mobility is low, whereas the mobility of a fluid having high viscosity is low. As a result, it is difficult to obtain a fluid having satisfactory mobility as well as satisfactory viscosity.

Consequently, when an ink having high mobility is used, the transferring process is easily carried out. However, the ink is not easily stuck to the surface of the blanket, i.e., the ink falls from the blanket. As a result, the shape of the ink printed on the substrate is not maintained.

When an ink having high viscosity is used, on the other hand, the ink is easily stuck to the surface of the blanket with the result that the shape of the ink printed on the substrate is maintained. However, the transferring process is not easily carried out. Also, when the ink is flattened by a blade, the cut surface of the ink may not be smooth.

The inkjet printing method is a method in which a nozzle receiving a printing ink is disposed above a substrate, and the printing ink injected from the nozzle is printed on the substrate in a drop-wise fashion. The inkjet printing method is suitable for mass production, and costs necessary to carry out processes of the inkjet printing method are inexpensive. For this reason, the inkjet printing method is widely being used.

In the inkjet printing method requires, however, the viscosity of the printing ink must be high such that the ink cannot be discharged through the nozzle while the printing ink is received in the nozzle. On the other hand, the mobility of the printing ink must be high such that the printing ink can easily drop from the nozzle in the printing process. Furthermore, the viscosity of the ink must be high such that the shape of the ink having dropped to the top surface of the substrate is maintained without collapse of the ink.

Consequently, when an ink having high mobility is used, the ink easily drops from the nozzle. However, the ink may leak from the nozzle even before the printing process is initiated. Furthermore, the shape of the ink having dropped to the top surface of the substrate may not be maintained.

When an ink having high viscosity is used, on the other hand, the ink may not drop from the nozzle with the result that the ink may be stuck inside the nozzle, although the ink does not leak from the nozzle before the printing process is initiated and the shape of the ink having dropped to the top surface of the substrate is maintained.

The dispensing method is a method of applying slurry having specific physical properties, such as viscosity and elasticity, using a nozzle.

At the present time, various attempts are being made to control the amount of a raw material and the amount of a binder and a solvent so as to obtain a slurry having both high mobility and shape sustainability.

In order that the slurry is used in a dispensing technology and an inkjet technology, the fluidity of the slurry must be increased when stress is applied to the slurry (high mobility), and the slurry must return to its original phase when the stress is removed from the slurry (shape sustainability). In other words, the slurry must have excellent thixotropy.

When the properties of the slurry are controlled using the above-specified methods, however, it is difficult to manufacture a slurry having excellent thixotropy. Accordingly, development of a desired slurry is delayed, which results in the loss of costs and time.

### SUMMARY OF THE INVENTION

Accordingly, the present invention is directed to a printing ink and a phosphor slurry composition, a printer and a plasma display panel using the same, and a method of manufacturing the same that substantially obviate one or more problems due to limitations and disadvantages of the related art.

An object of the present invention is to provide a printing ink and a phosphor slurry composition, a printer and a plasma display panel using the same, and a method of manufacturing the same that are capable of controlling the properties of the printing ink, in a printing process for forming electrodes, phosphor films, partition walls, or blacktops of a plasma display panel, through the addition of a viscosity modifying agent, specifically a thixotropic agent, for changing viscosity of the printing ink when stress is applied to the printing ink, thereby accurately and conveniently performing the printing process.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a printing ink contains a viscosity modifying agent for changing viscosity of the printing ink when stress is applied to the printing ink.

As the viscosity modifying agent for changing viscosity of the printing ink depending upon the stress applied to the printing ink is contained in the printing ink, it is possible to appropriately change the viscosity of the printing ink based on specific characteristics of several processes of a printing method.

Preferably, the viscosity modifying agent is a thixotropic agent. Consequently, when stress is applied to the printing ink, the viscosity of the printing ink is decreased, and, when the stress is removed from the printing ink, the viscosity of the printing ink is increased.

Preferably, the printing ink is used in an offset printing system or an inkjet printing system. Consequently, it is possible to manufacture components of a plasma display panel, such as electrodes, phosphor films, partition walls, or blacktops.

In another aspect of the present invention, an offset printer includes a first printer body having a receiving groove for receiving a printing ink, and a second printer body for transferring the printing ink received in the receiving groove to a substrate such that the printing ink is printed on the substrate.

In another aspect of the present invention, an inkjet printer includes a chamber for receiving a printing ink, the chamber being positioned above a substrate for discharging the printing ink in a drop-wise fashion, and a stress supply unit for applying stress to the printing ink received in the chamber.

In another aspect of the present invention, a plasma display panel has components printed with a printing ink containing a viscosity modifying agent for changing viscosity of the printing ink when stress is applied to the printing ink.

Preferably, the components are electrodes, phosphor films, partition walls, or blacktops.

In another aspect of the present invention, a phosphor slurry for plasma display panels includes a first substance containing phosphor powder, the first substance being provided to form the phosphor powder in a slurry phase, and a second substance mixed with the first substance for improving thixotropy.

Preferably, the first substance includes at least one of an organic solvent, a binder, and a dispersing agent. Consequently, the first substance is formed in a slurry phase together with the phosphor powder. The slurry is used in a dispensing technology or an inkjet technology.

Preferably, the second substance is gelatin, for an organic substance, and silicate and/or aluminum hydroxide, for an inorganic substance.

Preferably, the content of the second substance is 0.1 to 10 wt%. More preferably, the content of the second substance is 0.1 to 5 wt%.

In another aspect of the present invention, a method of forming a phosphor film in a plasma display panel using the above-described phosphor slurry includes applying the phosphor slurry to discharge cells of the plasma display panel, and sintering the phosphor slurry applied to the discharge cells.

Preferably, the applying the phosphor slurry to the discharge cells is performed using a dispensing technology or an inkjet technology. Specifically, the phosphor slurry is applied to the partition walls through nozzles.

In a further aspect of the present invention, a phosphor composition includes phosphor powder, a dispersing agent, and a binder. The phosphor composition further includes a substance having thixotropy.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating an example of a general plasma display panel.

FIGs. 2 to 4 illustrate a printing method of an offset printer according to an embodiment of the present invention, wherein

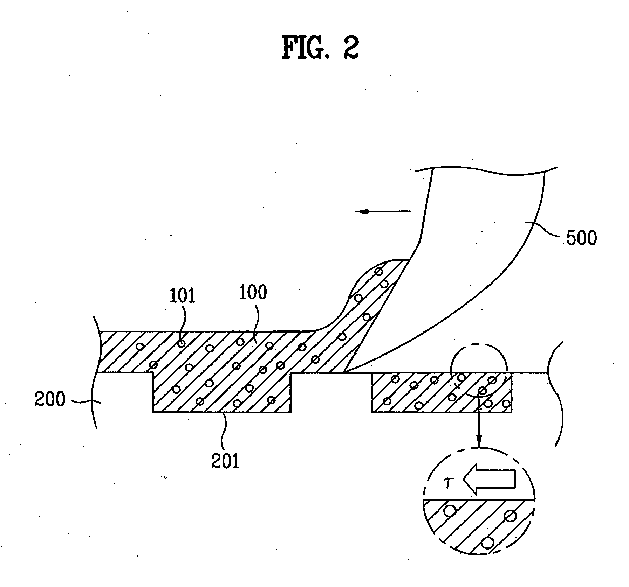

FIG. 2 is a typical view schematically illustrating a doctoring process,

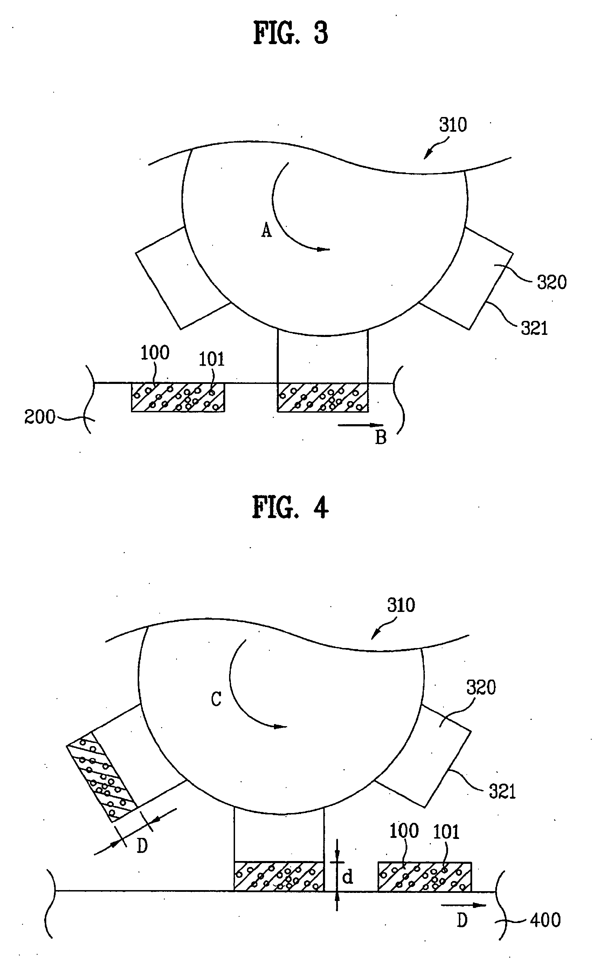

FIG. 3 is a typical view schematically illustrating a transferring process, and

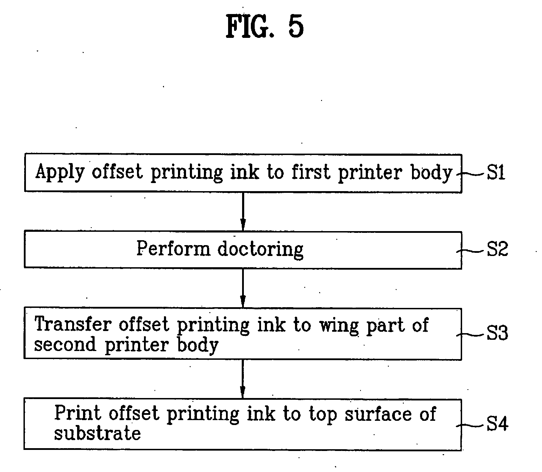

FIG. 4 is a typical view schematically illustrating a printing process.

FIG. 5 is a flow chart sequentially illustrating a printing method of an offset printer according to another embodiment of the present invention.

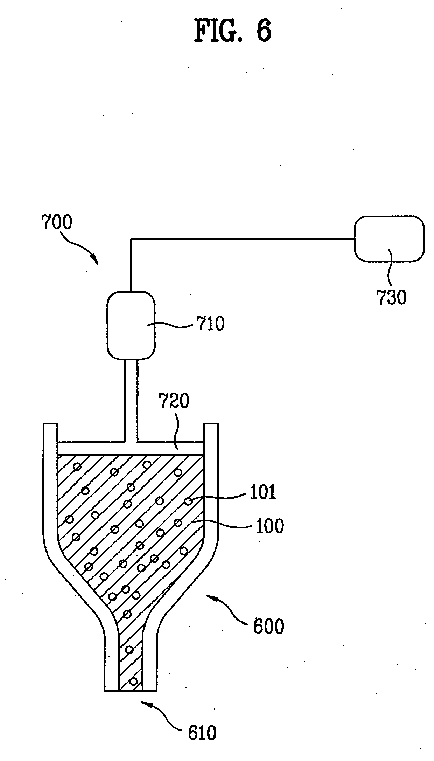

FIG. 6 is a typical view schematically illustrating the structure of an inkjet printer according to yet another embodiment of the present invention.

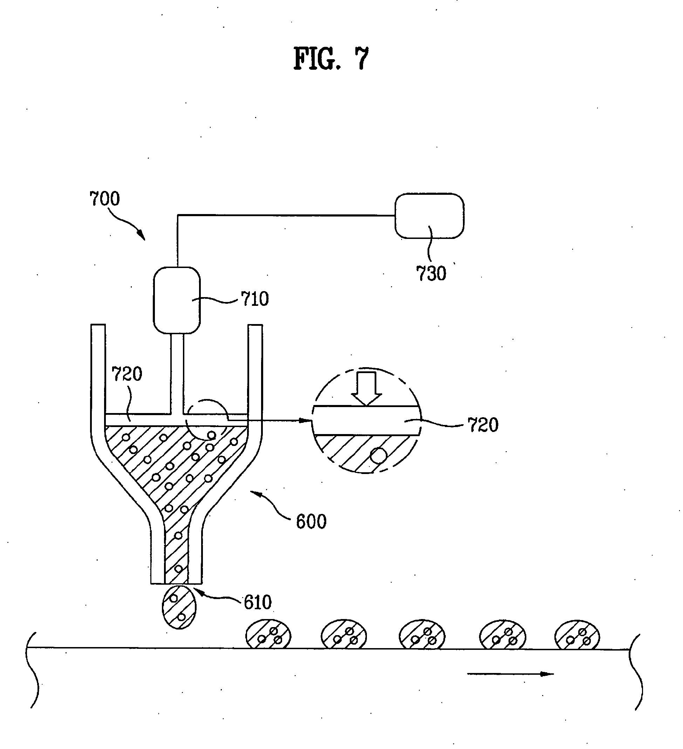

FIG. 7 is typical view schematically illustrating a printing method of the inkjet printer shown in FIG. 6.

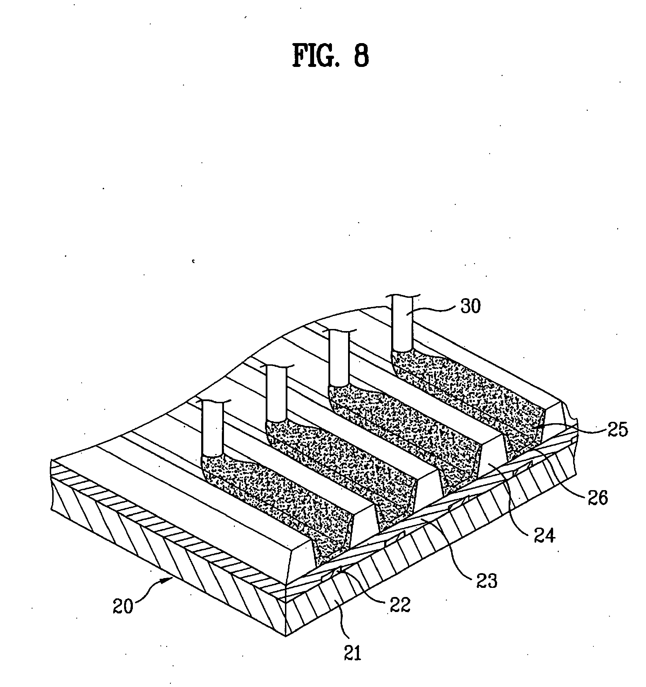

FIG. 8 is a perspective view illustrating a method of forming a phosphor film using a dispensing technology according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

First, a printing ink according to the present invention will be described in detail.

In an embodiment, the printing ink may contain a viscosity modifying agent.

The viscosity modifying agent is an additive agent that can modify the viscosity of the printing ink according to the magnitude of stress applied to the printing ink. The viscosity modifying agent includes a thixotropic agent and a dilatant agent.

Thixotropy is a physical property in which, when stress is applied to a fluid, the viscosity of the fluid is decreased with the result that the fluid is changed into a gel phase, and, when the stress is removed from the fluid, the viscosity of the fluid is increased with the result that the fluid is changed into a sol phase. In other words, thixotropy is a specific property in which, as the flow speed of a fluid is increased, the viscosity of the fluid is decreased, and, as the flow speed of a fluid is decreased, the viscosity of the fluid is increased.

Specifically, thixotropy is a result of hydrogen bonding between hydrophilic suspended particles which form a lattice of filaments through a liquid. Thixotropy is a phenomenon in which, when external stress is applied to the liquid, the hydrophilic suspended particles bear the stress to some extent and then the mobility of the hydrophilic suspended particles is abruptly increased, and, when the external stress is removed from the liquid, the hydrophilic suspended particles return to their original phases, i.e., solid phases.

Preferably, the thixotropic agent is silicon oxide, silicic acid, or magnesium, although the thixotropic agent is not limited to the above-specified ones.

On the other hand, dilatancy is a physical property in which, when stress is applied to a liquid, gaps between particles are increased with the result that the liquid is solidified while the liquid is absorbed. In other words, dilatancy is a property in which, when stress is applied to a fluid, the viscosity of the fluid is increased, and, when the stress is removed from the fluid, the viscosity of the fluid is decreased.

Hereinafter, an example of an offset printer using the above-described printing ink will be described with reference to the accompanying drawings.

As shown in FIGs. 2 to 4, the offset printer includes a printing ink 100 containing a thixotropic agent 101, a first printer body 200, a second printer body 300, and a substrate 400.

The first body 200 may be depressed so as to form at least one receiving groove 201 for receiving the printing ink 100.

The first printer body 200 may be constructed in a structure in which the first body 200 moves along a plane, like a conveyor belt, or may be fixed to the ground.

As will be described below, only the relative movement is needed between the first printer body 200 and the second printer body 300. Consequently, the movement of the first printer body 200 may be accomplished using a well-known technology.

The second printer body 300 is constructed in the shape of a roller like a blanket. The second printer body 300 may include a body part 310 and a wing part 320.

According to circumstances, the wing part 320 may be omitted. That is to say, the second printer body 300 may include only the body part 310, which is formed in the shape of a roller.

The wing part 320 may protrude from the outer circumference of the second printer body 300 such that the wing part 320 has a size corresponding to that of the receiving groove 201 of the first printer body 200.

The wing part 320, preferably, at least one wing part 320, is a position to which the printing ink 100 received in the receiving groove 201 of the first printer body 200 is transferred. Using such a wing part 320 enables the printing ink 100 to be accurately transferred to a desired position.

Hereinafter, a printing method using the offset printer with the above-stated construction will be described in detail.

When components of a plasma display panel, such as electrodes, phosphor films, partition walls, or blacktops, are to be formed on the top surface of the substrate 400 using the offset printer as shown in FIGs. 2 to 4, an offset printing ink 100 having a thixotropic agent 101 is applied first to the top surface of the first printer body 200 having the at least one receiving groove 201 formed therein (S1).

Subsequently, as shown in FIG. 2, the printing ink 100 excessively applied to the top surface of the first printer body 200 is doctored, i.e., removed, using a doctor blade 500 (S2).

In this case, the printing ink 100 must have high mobility. This is because, when the viscosity of the printing ink 100 is too high, the face of the printing ink 100 flattened by the doctor blade 500 is not smooth. Furthermore, the printing ink 100 may be stuck to the doctor blade 500, and therefore, the printing ink 100 may be separated from the receiving groove 201.

As shown in FIG. 2 in an enlarged scale, the doctor blade 500 applies shear stress τ to the printing ink 100. As a result, the shear stress τ is applied to the printing ink 100 containing the thixotropic agent 101, and therefore, the viscosity of the printing ink 100 is decreased.

Consequently, the mobility of the printing ink 100 is increased, and therefore, the face of the printing ink 100 cut by the doctor blade 500 is flattened. In other words, the face of the printing ink 100 becomes smooth.

Subsequently, as shown in FIG. 3, the second printer body 300 is rotated in A direction, and, at the same time, the first printer body 200 is linearly moved in B direction, such that the wing part 320 of the second printer body 300 fully corresponds to the receiving grooves 201 of the first printer body 200 (S3). As a result, the printing ink 100 is transferred to a tip end 321 of the wing part 320 of the second printer body 300. Consequently, the printing ink 100 is stuck to the wing part 320 of the second printer body 300.

In this case, the printing ink 100 must have high adhesive power, i.e., high viscosity. This is because, when the viscosity of the printing ink 100 is low, the printing ink 100 is not transferred to the wing part 320 of the second printer body 300.

When the stress is removed from the doctor blade 500 during the above-described process, the viscosity of the printing ink 100 is increased again. As a result, the printing ink 100 is changed into a semisolid phase.

Consequently, the printing ink 100 received in the receiving groove 201 of the first printer body 200 is transferred to the tip end 321 of the wing part 320 of the second printer body 300, and therefore, the printing ink 100 is stuck to the tip end 321 of the wing part 320 of the second printer body 300.

Subsequently, as shown in FIG. 4, the second printer body 300 is rotated in C direction while the wing part 320 of the second printer body 300 is spaced a predetermined distance from the top surface of the substrate 400, and, at the same time, the substrate 400 is linearly moved in D direction.

As a result, the printing ink 100 transferred to the tip end 321 of the wing part 320 of the second printer body 300 is transferred to the top surface of the substrate 400. Consequently, printing is accomplished on the top surface of the substrate 400 (S4).

During the transferring process, the printing ink 100 must have a proper-level adhesive power. This is because, when the viscosity of the printing ink 100 is too low, the printing ink 100 falls with the result that the shape of the ink 100 printed to the top surface of the substrate 400 is not maintained.

When the viscosity of the printing ink 100 is high, however, the printing ink 100 may not be separated from the tip end 321 of the wing part 320 of the second printer body 300. This problem may be solved by appropriately adjusting the distance d between the tip end 321 of the wing part 320 of the second printer body 300 and the substrate 400.

Specifically, the distance d between the tip end 321 of the wing part 320 of the second printer body 300 and the substrate 400 may be adjusted such that the distance d between the tip end 321 of the wing part 320 of the second printer body 300 and the substrate 400 is less than the thickness D of the printing ink 100 transferred to the tip end 321 of the wing part 320 of the second printer body 300.

When the printing ink 100 is printed to the substrate 400, the printing ink 100 is pressed against the substrate 400 by the tip end 321 of the wing part 320 of the second printer body 300. As a result, shear stress τ and compression stress are applied to the printing ink 100.

Consequently, the viscosity of the printing ink 100 is decreased again. As a result, the printing ink 100 is easily separated from the tip end 321 of the wing part 320 of the second printer body 300, and therefore, the printing ink 100 is transferred to the substrate 400.

After the printing ink 100 is transferred and printed to the top surface of the substrate 400, the second printer body 300 does not press the printing ink 100 any longer. As a result, the viscosity of the printing ink 100 is increased again. Consequently, the printing ink 100 does not collapse, and therefore, the shape of the printing ink 100 is maintained.

During the doctoring process (S2), the viscosity of the printing ink 100 is low. As a result, the mobility of the printing ink 100 is excellent, and therefore, the doctoring process (S2) is easily performed. During the transferring process (S3), the viscosity of the printing ink 100 is high. As a result, the printing ink 100 is transferred to the tip end 321 of the wing part 320 of the second printer body 300 without the falling of the printing ink 100.

During the printing process (S4), the viscosity of the printing ink 100 is high. As a result, the shape of the ink 100 printed to the top surface of the substrate 400 is maintained without the collapse of the printing ink 100.

Hereinafter, the structure of an inkjet printer according to the present invention will be described with reference to the accompanying drawings.

FIG. 6 is a typical view schematically illustrating the structure of an inkjet printer according to the present invention, and FIG. 7 is typical view schematically illustrating a printing method of the inkjet printer shown in FIG. 6.

As shown in FIG. 6, the inkjet printer according to the present invention includes a chamber having an inner space for receiving a printing ink 100, and a stress supply unit 700 for applying stress to the printing ink 100 received in the chamber 600.

The chamber 600 is provided at the lower end thereof with an injection port 610, which is formed through the chamber 600 such that the printing ink 100 can be dropped through the injection port 610. The chamber 600 is disposed perpendicular to the top surface of the substrate 400.

The stress supply unit 700 may include an actuator 710, a piston 720 movable vertically by the actuator 710, and a controller 730 for controlling the actuator 710.

The actuator 710 drives the piston 720, such that the piston 720 can be moved vertically, according a command from the controller 730. As a result, stress from the piston 720 is transmitted to the printing ink 100 received in the chamber 600.

The piston 720 is mounted in the chamber 600 such that the outer circumferential surface of the piston 720 corresponds to the inner circumferential surface of the chamber 600. Consequently, the piston 720 is driven along the inner circumferential surface of the chamber 600 in a reciprocating fashion.

The operation of the inkjet printer with the above-stated construction will be described hereinafter.

When a user wishes to print components of a plasma display panel, such as electrodes, phosphor layers, partition walls, or blacktops, using the inkjet printer, the user fills the chamber 600 with a printing ink 100, and closes the upper opening of the chamber 600 with the piston 720.

The printing ink 100 contains a thixotropic agent 101. At this time, stress from the piston 720 is not yet applied to the printing ink 100. Consequently, the viscosity of the printing ink 100 is high, and therefore, the printing ink 100 is stuck to the inner wall surface of the chamber 600 with the result that the printing ink 100 does not fall through the injection port 610 of the chamber 600.

When the printing ink 100 is to be printed on the top surface of the substrate 400, a printing command is given from the controller 730. As a result, the actuator 710, receiving the printing command from the controller 730, drives the piston 720 such that the piston 720 is moved downward. Consequently, compression stress σ from the piston 720 is applied to printing ink 100.

As a result, the viscosity of the printing ink 100, which contains the thixotropic agent 101, is decreased, and therefore, the printing ink 100 is discharged through the injection port 610 of the chamber 600.

When the piston 720 is moved upward by the actuator 710 after the piston 720 compresses the printing ink 100 in the chamber 600, the stress is removed from the printing ink 100. As a result, the viscosity of the printing ink 100 is increased again, and therefore, the printing ink 100 is stuck to the inner wall surface of the chamber 600 with the result that the printing ink 100 does not fall through the injection port 610 of the chamber 600.

In this way, the viscosity of the printing ink 100 discharged through the injection port 610 of the chamber 600 is changed into high viscosity, low viscosity, and high viscosity again. As a result, the printing ink 100 is discharged in a drop-wise fashion.

Consequently, it is possible to program the controller 730 such that the piston 720 can be vertically reciprocated by the actuator 710 in a specific cycle depending upon the size of a drop of the printing ink 100 to be printed on the top surface of the substrate 400.

Specifically, when it is necessary to increase the size of a drop of the printing ink 100 to be printed on the top surface of the substrate 400, the controller 730 is programmed such that the piston 720 can be vertically reciprocated by the actuator 710 in a long cycle. When it is necessary to decrease the size of a drop of the printing ink 100 to be printed on the top surface of the substrate 400, on the other hand, the controller 730 is programmed such that the piston 720 can be vertically reciprocated by the actuator 710 in a short cycle.

No stress is applied to the printing ink 100 having dropped on the top surface of the substrate 400. As a result, the viscosity of the printing ink 100 is increased, and therefore, the shape of the printing ink 100 is maintained without the collapse of the printing ink 100.

According to the inkjet printer with the above-stated construction, no stress is applied to the printing ink 100 before printing is initiated. Consequently, the viscosity of the printing ink 100 is high, and therefore, the printing ink 100 does not fall through the injection port 610 of the chamber 600.

When the printing is initiated, the viscosity of the printing ink 100 is decreased due to stress to the printing ink 100 from the piston 720. As a result, the printing ink 100 drops through the injection port 610 of the chamber 600. No stress is applied to the ink 100 printed to the top surface of the substrate 400. As a result, the viscosity of the printing ink 100 is increased, and therefore, the shape of the printing ink 100 is maintained without the collapse of the printing ink 100.

Hereinafter, a method of forming a phosphor film using the above-described thixotropic agent will be described with reference to FIG. 8.

In order to form such a phosphor film, a phosphor may be used in a slurry phase.

Specifically, a phosphor slurry is manufactured by mixing phosphor powder with an organic solvent or a binder such that the phosphor powder can be used in the phosphor film forming method. Especially, the phosphor slurry may contain a substance for improving the above-described thixotropy.

The phosphor slurry may further contain a dispersing agent for uniformly dispersing the phosphor powder in the phosphor slurry.

As previously described, thixotropy is a physical property in which, when stress is applied to a fluid having specific viscosity, the mobility of the fluid is increased (high mobility), and, when the stress is removed from the fluid, the fluid returns to its original shape (high shape sustainability). In other words, thixotropy is a specific property of the fluid.

The phosphor slurry is provided to form a phosphor layer using a dispensing technology or an inkjet technology. When the above-specified technologies are used, the phosphor slurry may have viscosity lower than that of common paste.

FIG. 8 illustrates a method of forming a phosphor film 26 in each discharge cell 25 of a lower panel 20 of a PDP, which includes address electrodes 22 and an insulating layer 23 formed on a dielectric layer 21 and partition walls 24 formed on the insulating layer 23 to form the discharge cells 25, using the dispensing technology.

As shown in FIG. 8, the phosphor film 26 is formed at the corresponding partition wall, which is constructed in a band-shaped stripe-type structure, although the phosphor film 26 may be formed at a partition wall constructed in a well-type structure.

The formation of the phosphor films 26 using the dispensing technology is performed as follows. First, phosphor slurry is discharged into the discharge cells 25, which are formed between adjacent partition walls 24, through nozzles 30 corresponding to the discharge cells 25, as shown in FIG. 8, to form the phosphor films 26.

The nozzles 30 are arranged at regular intervals such that the nozzles 30 correspond to the discharge cells 25, respectively. When the phosphor slurry is discharged into the discharge cells 25 while pressure is applied to the phosphor slurry, the nozzles 30 are moved along the corresponding discharge cells 25. As a result, the phosphor slurry is continuously discharged along the respective discharge cells 25.

At this time, the phosphor slurry according to the present invention has high thixotropy, i.e., high mobility, and therefore, the phosphor slurry is uniformly applied to the respective discharge cells 25, whereby the phosphor films 26 are uniformly formed.

Specifically, when the phosphor slurry is applied to the respective discharge cells 25, the phosphor slurry is discharged into the respective discharge cells 25 at high speed through the corresponding nozzles 30, which moves along the respective discharge cells 25. Consequently, the phosphor slurry is prevented from being accumulated in parts, while the phosphor slurry is applied to the respective discharge cells 25, and therefore, when the phosphor slurry is subsequently applied to the respective discharge cells 25, there does not occur a phenomenon in which the phosphor slurry overflows into the neighboring discharge cells 25.

Subsequently, when the nozzles 30 reach one end of the upper panel 20, the pressure is removed from the phosphor slurry. As a result, the phosphor slurry is not discharged from the respective nozzles 30 any more.

As previously described, the shape sustainability of the phosphor slurry according to the present invention is excellent. Consequently, the uniformly applied state of the phosphor films 26 is maintained simultaneously when the pressure is removed from the phosphor films 26.

Subsequently, the applied phosphor films 26 are sintered to obtain phosphor layers.

On the other hand, the phosphor films 26 may be manufactured by the above-described inkjet technology using the phosphor slurry.

For a technology using paste, such as a pattern printing technology or a photosensitive paste technology, the paste has a viscosity of approximately 100,000 cps (centi poise) or more. According to the present invention, on the other hand, the phosphor slurry is manufactured such that the phosphor slurry has a viscosity of approximately 20,000 cps.

As a second substance (thixotropic agent) for increasing thixotropy as described above may be used gelatin, for an organic substance, or silicate or aluminum hydroxide, for an inorganic substance.

Although the binder or the dispersing agent basically has thixotropy, it is possible to use another binder or dispensing agent having higher thixotropy. In this case, no additional thixotropic agent may be needed.

The organic substance is fully evaporated at the time of sintering process, which will be subsequently performed, whereas the inorganic substance is left even after the sintering process is performed.

For this reason, the content of the thixotropic agent in the phosphor slurry must be controlled within a range in which thixotropy is improved and, at the same time, the phosphor is not affected by the thixotropic agent.

Repetitive experiments and evaluations on the content of the thixotropic agent have been carried out, and the results thereof are indicated in Table 1.

**Table 1**

| Content (wt%) | Dispersibility | Phosphor properties | Remaining binder |
|---|---|---|---|
| No | Bad | Excellent | No |
| 0.1 | Normal | Excellent | No |
| 0.5 | Good | Excellent | No |
| 5.0 | Good | Excellent | No |
| 10.0 | Good | Bad | No |
| 15.0 | Good | Bad | Yes |

As can be seen from Table 1, when the content of the thixotropic agent according to the present invention was 0.1 to 10 wt%, the thixotropy of the phosphor slurry was improved while the phosphor properties of the phosphor slurry were not particularly affected.

It can be also seen from Table 1 that, when an inorganic substance was used as the thixotropic agent and the content of the thixotropic agent was 15 wt% or more, the remaining binder existed, which may affect the phosphor properties of the phosphor slurry.

It can be also seen from Table 1 that, when the content of the thixotropic agent was 0.5 to 5 wt%, the dispersibility of the thixotropic agent due to improvement of the thixotropy of the phosphor slurry was good, the phosphor properties of the phosphor slurry were excellent, and the remaining binder did not exist after the sintering. Consequently, it is preferable to use a thixotropic agent having a content of 0.5 to 5 wt%.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A printing ink containing a viscosity modifying agent for changing viscosity of the printing ink when stress is applied to the printing ink.

2. The printing ink according to claim 1, wherein the viscosity modifying agent is a thixotropic agent.

3. The printing ink according to claim 2, wherein the thixotropic agent is silicon oxide, silicic acid, and/or magnesium.

4. The printing ink according to claim 1, wherein the printing ink forms electrodes, phosphor films, partition walls, or blacktops.

5. An offset printer comprising:
a printing ink containing a viscosity modifying agent for changing viscosity of the printing ink when stress is applied to the printing ink;
a first printer body having a receiving groove for receiving the printing ink; and
a second printer body for transferring the printing ink received in the receiving groove to a substrate such that the printing ink is printed on the substrate.

6. The offset printer according to claim 5, wherein the viscosity modifying agent is a thixotropic agent.

7. The offset printer according to claim 6, wherein the thixotropic agent is silicon oxide, silicic acid, and/or magnesium.

8. An inkjet printer comprising:
a printing ink containing a viscosity modifying agent for changing viscosity of the printing ink when stress is applied to the printing ink;
a chamber for receiving the printing ink, the chamber being positioned above a substrate for discharging the printing ink in a drop-wise fashion; and
a stress supply unit for applying stress to the printing ink received in the chamber.

9. The inkjet printer according to claim 8, wherein the viscosity modifying agent is a thixotropic agent.

10. The inkjet printer according to claim 9, wherein the thixotropic agent is silicon oxide, silicic acid, and/or magnesium.

11. A plasma display panel having components printed with a printing ink containing a viscosity modifying agent for changing viscosity of the printing ink when stress is applied to the printing ink.

12. The plasma display panel according to claim 11, wherein the viscosity modifying agent is a thixotropic agent.

13. The plasma display panel according to claim 12, wherein the thixotropic agent is silicon oxide, silicic acid, and/or magnesium.

14. The plasma display panel according to claim 11, wherein the components are electrodes, phosphor films, partition walls, or blacktops.

15. A phosphor composition for plasma display panels, comprising phosphor powder, a dispersing agent, and a binder, wherein
the phosphor composition further comprises a substance having thixotropy.

16. The phosphor composition according to claim 15, wherein the substance having thixotropy is a thixotropic agent contained in the phosphor composition.

17. The phosphor composition according to claim 15, wherein the substance having thixotropy is a thixotropic dispersing agent.

18. The phosphor composition according to claim 15, wherein the substance having thixotropy is a thixotropic binder.

19. The phosphor composition according to claim 15, wherein the content of the substance having thixotropy in the phosphor composition is 0.1 to 10 wt%.

20. The phosphor composition according to claim 15, wherein the substance having thixotropy is an organic substance.

21. The phosphor composition according to claim 20, wherein the organic substance is gelatin.

22. The phosphor composition according to claim 15, wherein the substance having thixotropy is an inorganic substance.

23. The phosphor composition according to claim 22, wherein the inorganic substance is silicate or aluminum hydroxide.

24. A phosphor slurry comprising a phosphor composition according to claim 15.

25. A phosphor slurry for plasma display panels, comprising:
a first substance containing phosphor powder, the first substance being provided to form the phosphor powder in a slurry phase; and
a second substance mixed with the first substance for improving thixotropy.

26. The phosphor slurry according to claim 25, wherein the first substance includes at least one of an organic solvent, a binder, and a dispersing agent.

27. The phosphor slurry according to claim 25, wherein the second substance is gelatin, silicate, and/or aluminum hydroxide.

28. The phosphor slurry according to claim 25, wherein the content of the second substance is 0.1 to 10 wt%.

29. The phosphor slurry according to claim 25, wherein the content of the second substance is 0.1 to 5 wt%.

30. A method of forming a phosphor film in a plasma display panel using a phosphor slurry according to claim 25, comprising:
applying the phosphor slurry to discharge cells of the plasma display panel; and
sintering the phosphor slurry applied to the discharge cells.

31. The method according to claim 30, wherein the applying the phosphor slurry to the discharge cells is performed using a dispensing technology.

32. The method according to claim 30, wherein the applying the phosphor slurry to the discharge cells is performed using an inkjet technology.

33. A printing ink containing a thixotropic agent for changing thixotropy of the printing ink when stress is applied to the printing ink.
